# EUROPEAN PATENT APPLICATION

(11) **EP 4 815 464 A1**
(43) Date of publication of application: **30.09.2026**
(21) Application number: 25305412.6
(22) Date of filing: 24.03.2025
(51) Int. Cl.: H04N 21/234, H04N 21/81, H04N 21/854, G06T 13/00, G06T 13/40, G06T 17/00

(54) **COMPONENTS ANIMATION BASED ON CONTROLLERS**

(71) Applicant: InterDigital CE Patent Holdings, SAS, 75017 Paris (FR)
(72) Inventor: GOSSELIN, Philippe Henri, 35340 LIFFRE (FR); AVRIL, Quentin, 35830 BETTON (FR); COVA REGATEIRO, João Pedro, 35220 CHATEAUBOURG (FR); LE CLERC, Francois, 35590 L'HERMITAGE (FR)
(74) Representative: Vossius & Partner Patentanwälte Rechtsanwälte mbB

(57) **Abstract**

Some embodiments of a method may include: obtaining a MPEG Avatar Representation Format (ARF)-based file, wherein the MPEG ARF-based file comprises a list identifying one or more controller sets of an avatar, wherein each of the one or more controller sets comprise one or more controllers, wherein each of the one or more controllers comprise a first list of one or more channels, and wherein at least one of the one or more channels comprises a texture, a UV mapping, or a shader property; verifying the MPEG ARF-based file comprises information corresponding to the one or more channels; parsing the information corresponding to the one or more channels into one or more respective channel data structures; and controlling a component of the avatar using at least one of the one or more channel data structures.

## Description

### INCORPORATION BY REFERENCE

The present application incorporates by reference in their entirety the following applications: European Patent Application Serial No. EP25305330, entitled "GAZE SIGNALING IN MPEG AVATAR REPRESENTATION FORMAT" and filed March 13, 2025 ("'330 application"); European Patent Application Serial No. EP24306120, entitled "AVATAR LOOKAT GAZE IN SCENE DESCRIPTION" and filed July 5, 2024 ("'120 application"); European Patent Application Serial No. EP23307173, entitled "AVATAR ANGULAR GAZE IN SCENE DESCRIPTION" and filed December 11, 2023 ("'173 application"); European Patent Application Serial No. EP23305963, entitled "TEXTURE TARGETS ON MPEG-I SCENE DESCRIPTION" and filed June 16, 2023 ("'963 application"); European Patent Application Serial No. EP25305373, entitled "PARAMETRIC TEXTURES IN AVATAR REPRESENTATION FORMAT" and filed March 19, 2025 ("373 application"); European Patent Application Serial No. EP25305036, entitled "CONTROLLERS SIGNALING IN MPEG AVATAR REPRESENTATION FORMAT" and filed January 14, 2025 ("'036 application"); European Patent Application Serial No. EP24306850, entitled "Controllers in MPEG Avatar Representation Format" and filed November 1, 2024 ("'850 application"); European Patent Application Serial No. EP24305458, entitled "Avatars Controllers in Scene Descriptions" and filed March 27, 2024 ("'458 application"); European Patent Application Serial No. EP24305094, entitled "Avatar JSON Interchange File Format" and filed January 15, 2024 ("'094 application"); International Patent Application Serial No. PCT/EP2024/078214, entitled "Avatar JSON Interchange File Format" and filed October 8, 2024 ("'214 application"); European Patent Application Serial No. EP23306167, entitled "Controllers on MPEG-I Scene Description" and filed July 10, 2023 ("'167 application"); International Patent Application Serial No. PCT/EP2024/068034, entitled "Controllers on MPEG-I Scene Description" and filed June 26, 2024 ("'034 application"); European Patent Application Serial No. EP23305405, entitled "Avatar Signaling on MPEG-I Scene Description" and filed March 24, 2023 ("'405 application"); and International Patent Application Serial No. PCT/EP2024/057092, entitled "Avatar Signaling on MPEG-I Scene Description" and filed March 15, 2024 ("'092 application").

### BACKGROUND

The present application is related to avatars.

### SUMMARY

An example method in accordance with some embodiments may include: obtaining a MPEG Avatar Representation Format (ARF)-based file, wherein the MPEG ARF-based file includes a list identifying one or more controller sets of an avatar, wherein each of the one or more controller sets include one or more controllers, wherein each of the one or more controllers include a first list of one or more channels, and wherein at least one of the one or more channels includes a texture, a UV mapping, or a shader property; verifying the MPEG ARF-based file includes information corresponding to the one or more channels; parsing the information corresponding to the one or more channels into one or more respective channel data structures; and controlling a component of the avatar using at least one of the one or more channel data structures.

For some embodiments of the example method, the MPEG ARF-based file includes a second list identifying one or more texture sets of the avatar.

For some embodiments of the example method, the MPEG ARF-based file includes a third list identifying one or more UV sets of the avatar.

For some embodiments of the example method, the MPEG ARF-based file includes a fourth list identifying one or more eye sets of the avatar.

For some embodiments of the example method, the MPEG ARF-based file includes information identifying one or more gaze animation properties associated with at least one of the one or more eye sets of the avatar.

For some embodiments of the example method, at least one of the one or more gaze animation properties identifies a texture, a UV mapping, or a shader program.

For some embodiments of the example method, the UV mapping maps one or more textures to the avatar.

For some embodiments of the example method, each of the one or more channel data structures include a weight, a range, and a target of the respective channel data structure.

Some embodiments of the example method may further include: identifying the target of at least one of the one or more channel data structures as indicating a texture channel; and parsing texture data in the corresponding channel data structure.

Some embodiments of the example method may further include: identifying the target of one of the one or more channel data structures as indicating a UV channel; and parsing UV data in the corresponding channel data structure.

For some embodiments of the example method, the UV data includes a matrix transformation.

Some embodiments of the example method may further include: identifying the target of one of the one or more channel data structures as indicating a shader variable channel; and parsing shader property data in the corresponding channel data structure.

For some embodiments of the example method, the shader property data identifies a uniform shader variable.

For some embodiments of the example method, the shader property data identifies a shader program.

An example apparatus in accordance with some embodiments may include: a processor; and a memory storing instructions operative, when executed by the processor, to cause the apparatus to perform any one of the methods listed above.

### BRIEF DESCRIPTION OF THE DRAWINGS

The following detailed description will be better understood when read in conjunction with the appended drawings, in which there are shown examples of one or more of the multiple embodiments of the present application. It should be understood, however, that the embodiments described herein are not limited to the precise arrangements and instrumentalities shown in the drawings. In the drawings:
FIG. 1 is a system diagram illustrating an example set of interfaces for a system according to some embodiments.
FIG. 2 is a schematic illustration showing an example set of MPEG ARF main properties according to some embodiments.
FIG. 3 is a flowchart illustrating an example process for parsing of an LOD object with the "controllers" property according to some embodiments.
FIG. 4 is a flowchart illustrating an example process for parsing of a ControllerSet object according to some embodiments.
FIG. 5 is a flowchart illustrating an example process for parsing of a Controller object according to some embodiments.
FIGs. 6A and 6B show a flowchart illustrating an example process for parsing a Channel object according to some embodiments.
FIG. 7 is a flowchart illustrating an example process for parsing a MPEG ARF-based file according to some embodiments.

The entities, connections, arrangements, and the like that are depicted in-and described in connection with-the various figures are presented by way of example and not by way of limitation. As such, any and all statements or other indications as to what a particular figure "depicts," what a particular element or entity in a particular figure "is" or "has," and any and all similar statements-that may in isolation and out of context be read as absolute and therefore limiting-may only properly be read as being constructively preceded by a clause such as "In at least one embodiment, ...." For brevity and clarity of presentation, this implied leading clause is not repeated *ad nauseum* in the detailed description.

### DETAILED DESCRIPTION

In describing the various embodiments of the present application, certain terminology is used herein for convenience only and should not be considered as limiting such embodiments. In the drawings, the same reference numerals are employed for designating the same elements throughout the several figures and the present description.

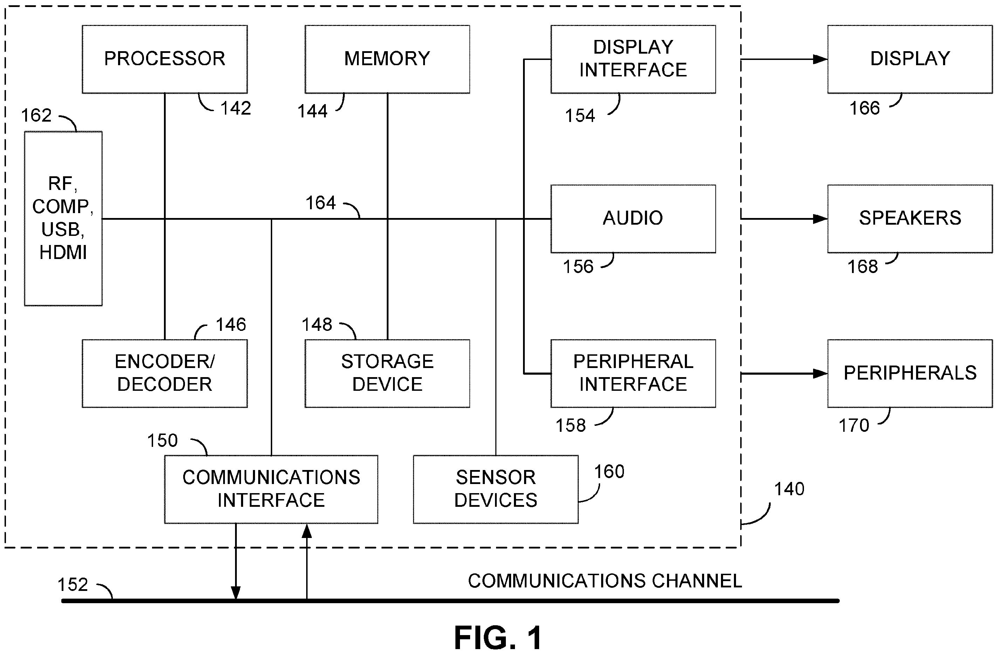

FIG. 1 is a system diagram illustrating an example set of interfaces for a system according to some embodiments. An extended reality display device, together with its control electronics, may be implemented using a system such as the system of FIG. 1. System 140 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 140, singly or in combination, can be embodied in a single integrated circuit (IC), multiple ICs, and/or discrete components. For example, in at least one embodiment, the processing and encoder/decoder elements of system 140 are distributed across multiple ICs and/or discrete components. In various embodiments, the system 140 is communicatively coupled to one or more other systems, or other electronic devices, via, for example, a communications bus or through dedicated input and/or output ports. In various embodiments, the system 140 is configured to implement one or more of the aspects described in this document.

The system 140 includes at least one processor 142 configured to execute instructions loaded therein for implementing, for example, the various aspects described in this document. Processor 142 may include embedded memory, input output interface, and various other circuitries as known in the art. The system 140 includes at least one memory 144 (e.g., a volatile memory device, and/or a non-volatile memory device). System 140 may include a storage device 148, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 148 can include an internal storage device, an attached storage device (including detachable and non-detachable storage devices), and/or a network accessible storage device, as non-limiting examples.

System 140 includes an encoder/decoder module 146 configured, for example, to process data to provide an encoded video or decoded video, and the encoder/decoder module 146 can include its own processor and memory. The encoder/decoder module 146 represents module(s) that can be included in a device to perform the encoding and/or decoding functions. As is known, a device can include one or both of the encoding and decoding modules. Additionally, encoder/decoder module 146 can be implemented as a separate element of system 140 or can be incorporated within processor 142 as a combination of hardware and software as known to those skilled in the art.

Program code to be loaded onto processor 142 or encoder/decoder 146 to perform the various aspects described in this document can be stored in storage device 148 and subsequently loaded onto memory 144 for execution by processor 142. In accordance with various embodiments, one or more of processor 142, memory 144, storage device 148, and encoder/decoder module 146 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 142 and/or the encoder/decoder module 146 is used to store instructions and to provide working memory for processing that is needed during encoding or decoding. In other embodiments, however, a memory external to the processing device (for example, the processing device can be either the processor 142 or the encoder/decoder module 142) is used for one or more of these functions. The external memory can be the memory 144 and/or the storage device 148, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or WC (Versatile Video Coding, a new standard being developed by JVET, the Joint Video Experts Team).

The input to the elements of system 140 can be provided through various input devices as indicated in block 162. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1, include composite video.

In various embodiments, the input devices of block 162 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 140 to other electronic devices across USB and/or HDMI connections. It is to be understood that various aspects of input processing, for example, Reed-Solomon error correction, can be implemented, for example, within a separate input processing IC or within processor 142 as necessary. Similarly, aspects of USB or HDMI interface processing can be implemented within separate interface ICs or within processor 142 as necessary. The demodulated, error corrected, and demultiplexed stream is provided to various processing elements, including, for example, processor 142, and encoder/decoder 146 operating in combination with the memory and storage elements to process the datastream as necessary for presentation on an output device.

Various elements of system 140 can be provided within an integrated housing, Within the integrated housing, the various elements can be interconnected and transmit data therebetween using suitable connection arrangement 164, for example, an internal bus as known in the art, including the Inter-IC (I2C) bus, wiring, and printed circuit boards.

The system 140 includes communication interface 150 that enables communication with other devices via communication channel 152. The communication interface 150 can include, but is not limited to, a transceiver configured to transmit and to receive data over communication channel 152. The communication interface 150 can include, but is not limited to, a modem or network card and the communication channel 152 can be implemented, for example, within a wired and/or a wireless medium.

Data is streamed, or otherwise provided, to the system 140, in various embodiments, using a wireless network such as a Wi-Fi network, for example IEEE 802.11 (IEEE refers to the Institute of Electrical and Electronics Engineers). The Wi-Fi signal of these embodiments is received over the communications channel 152 and the communications interface 150 which are adapted for Wi-Fi communications. The communications channel 152 of these embodiments is typically connected to an access point or router that provides access to external networks including the Internet for allowing streaming applications and other over-the-top communications. Other embodiments provide streamed data to the system 140 using a set-top box that delivers the data over the HDMI connection of the input block 162. Still other embodiments provide streamed data to the system 140 using the RF connection of the input block 162. As indicated above, various embodiments provide data in a non-streaming manner. Additionally, various embodiments use wireless networks other than Wi-Fi, for example a cellular network or a Bluetooth network.

The system 140 can provide an output signal to various output devices, including a display 166, speakers 168, and other peripheral devices 170. The display 166 of various embodiments includes one or more of, for example, a touchscreen display, an organic light-emitting diode (OLED) display, a curved display, and/or a foldable display. The display 166 can be for a television, a tablet, a laptop, a cell phone (mobile phone), or other device. The display 166 can also be integrated with other components (for example, as in a smart phone), or separate (for example, an external monitor for a laptop). The other peripheral devices 170 include, in various examples of embodiments, one or more of a stand-alone digital video disc (or digital versatile disc) (DVR, for both terms), a disk player, a stereo system, and/or a lighting system. Various embodiments use one or more peripheral devices 170 that provide a function based on the output of the system 140. For example, a disk player performs the function of playing the output of the system 140.

In various embodiments, control signals are communicated between the system 140 and the display 166, speakers 168, or other peripheral devices 170 using signaling such as AV.Link, Consumer Electronics Control (CEC), or other communications protocols that enable device-to-device control with or without user intervention. The output devices can be communicatively coupled to system 140 via dedicated connections through respective interfaces 154, 156, and 158. Alternatively, the output devices can be connected to system 140 using the communications channel 152 via the communications interface 150. The display 166 and speakers 168 can be integrated in a single unit with the other components of system 140 in an electronic device such as, for example, a television. In various embodiments, the display interface 154 includes a display driver, such as, for example, a timing controller (T Con) chip.

The display 166 and speaker 168 can alternatively be separate from one or more of the other components, for example, if the RF portion of input 162 is part of a separate set-top box. In various embodiments in which the display 166 and speakers 168 are external components, the output signal can be provided via dedicated output connections, including, for example, HDMI ports, USB ports, or COMP outputs.

The system 140 may include one or more sensor devices 160. Examples of sensor devices that may be used include one or more GPS sensors, gyroscopic sensors, accelerometers, light sensors, cameras, depth cameras, microphones, and/or magnetometers. Such sensors may be used to determine information such as user's position and orientation. Where the system 140 is used as the control module for an extended reality display (such as control modules), the user's position and orientation may be used in determining how to render image data such that the user perceives the correct portion of a virtual object or virtual scene from the correct point of view. In the case of head-mounted display devices, the position and orientation of the device itself may be used to determine the position and orientation of the user for the purpose of rendering virtual content. In the case of other display devices, such as a phone, a tablet, a computer monitor, or a television, other inputs may be used to determine the position and orientation of the user for the purpose of rendering content. For example, a user may select and/or adjust a desired viewpoint and/or viewing direction with the use of a touch screen, keypad or keyboard, trackball, joystick, or other input. Where the display device has sensors such as accelerometers and/or gyroscopes, the viewpoint and orientation used for the purpose of rendering content may be selected and/or adjusted based on motion of the display device.

The embodiments can be carried out by computer software implemented by the processor 142 or by hardware, or by a combination of hardware and software. As a non-limiting example, the embodiments can be implemented by one or more integrated circuits. The memory 144 can be of any type appropriate to the technical environment and can be implemented using any appropriate data storage technology, such as optical memory devices, magnetic memory devices, semiconductor-based memory devices, fixed memory, and removable memory, as non-limiting examples. The processor 142 can be of any type appropriate to the technical environment, and can encompass one or more of microprocessors, general purpose computers, special purpose computers, and processors based on a multi-core architecture, as non-limiting examples.

A User Equipment (UE) may correspond to any eXtended Reality (XR) device/node which may come in variety of form factors. Typical UE (e.g., XR UE) may include, but not limited to the following: Head Mounted Displays (HMD), optical see-through glasses and video see-through HMDs for Augmented Reality (AR) and Mixed Reality (MR), mobile devices with positional tracking and camera, wearables etc. In addition to the above, several different types of XR UE may be envisioned based on XR device functions for e.g., as display, camera, sensors, sensor processing, wireless connectivity, XR/Media processing, and power supply, to be provided by one or more devices, wearables, actuators, controllers and/or accessories. One or more device/nodes/UEs may be grouped into a collaborative XR group for supporting any of XR applications/experience/services.

This application relates to the animation of avatar components based on controllers. The components are all the elements composing an avatar (e.g., mesh, texture, skeleton, blendshapes, and materials, among others). This application describes how to define and encode elements of an avatar in the MPEG Avatar Representation Format (ARF). See Information technology - Coded representation of immersive media - Part 39: Avatar Representation Format, ISO/IEC 23090-39:2025 (*"ISO*/*IEC 23090-39:2025").* The format described herein is compliant with MPEG ARF according to *ISO*/*IEC 23090-39:2025* for illustration purposes, but its meaning and use is generic.

Using, e.g., the '036, '167, or '405 applications, an avatar with controllers may be signaled. Such an avatar may control basic animation components, like blendshape weights and joint transforms. Furthermore, they may also control other controllers in a recursive fashion. However, as understood, there is no way to signal controllers that control other animable components, like parametric texture animation. See, e.g., the '963 and '373 applications.

This application describes signaling of avatar controllers able to control the following components: blendshape weights, joint transforms, controller weights, parametric texture weights, texture UV transforms, and uniform shader variables. The present application is an extension of the '036 application, in which controllers may control blendshape weights, joint transforms and controller weights. The signaling presented herein focuses on the MPEG ARF but similar embodiments may allow the signaling of such controllers in other formats like glTF (for instance, extending the '036, '167, or '405 applications.

### MPEG ARF

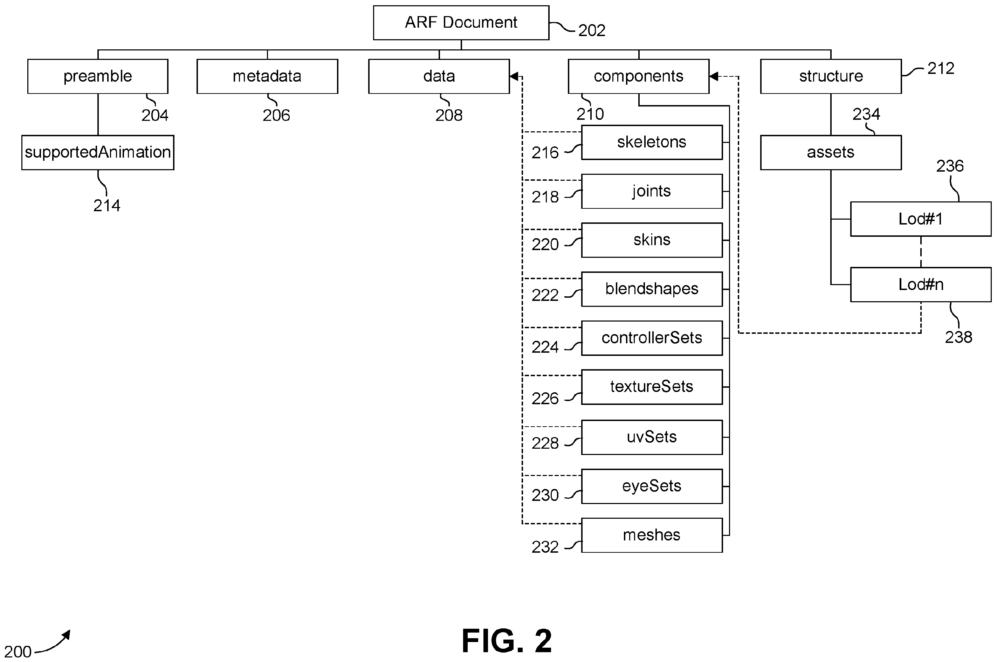

FIG. 2 is a schematic illustration showing an example set of MPEG ARF main properties according to some embodiments. MPEG ARF is based on a set of containers regrouped into categories as shown in *ISO*/*IEC 23090-39:2025.* The example structure 200 has an ARF document 202 and several categories of containers hanging off the ARF document.

The "preamble" container 204 is used to uniquely identify the format and characteristics of the file. In particular, the "preamble" container 204 contains a "supportedAnimation" property 214 which lists the streaming animation formats that the file supports.

The "metadata" container 206 contains main information, such as age or gender, of the avatar.

The "data" container 208 contains low-level data, like arrays of values, tensors, or references to external files. Items of the "data" container 208 are referenced by components.

The "components" container 210 contains several component containers (skeletons 216, joints 218, skins 220, blendshapes 222, controllerSets 224, textureSets 226, uvSets 228, eyeSets 230, and meshes 232), which are dedicated to a type of component. The "controllerSets" component 224 is used to signal the controller sets of the avatar. The "controllerSets" component 224 contains the *ControllerSet* list, which is defined later in this application.

The "textureSets" component container 226 defines parametric textures. See the '373 application. This application introduces the referencing of a texture within a texture set by a controller channel or a gaze animation.

The "uvSets" component container 228 defines UV mapping of textures. This application introduces the referencing of a UV mapping withing a UV set by a controller channel or a gaze animation.

The "eyeSets" component container 230 defines eye sets with gaze. See the '330 application. This application extends the signaling of a gaze animation (e.g., *GazeAnimation*).

The "structure" container 212 contains the "assets" component 234, which defines the components for an avatar part (body, hand, head, ...) for a level of detail (LOD) 236, 238.

### LOD with a Controller Set

The Level of Detail object provides a link to all components of an asset at a specific level of detail. Table 1 lists properties of an LOD object. The "controllers" property references all controller sets used by the LOD.

**Table 1.**

| **Name** | **Type** | **Use** | **Description** |
|---|---|---|---|
| name | string | M | The name of the LOD. |
| skins | array(number) | M | List of references to all skins that are part of this asset. |
| meshes | array(number) | M | List of non-skinned meshes that are part of this asset. |
| skeletons | array(number) | M | List of references to skeletons in the ARF container. |
| blendshapes | array(number) | M | List of references to blendshape sets in the ARF container. |
| controllers | array(number) | M | List of references to controller sets in the ARF container. |

### Signaling a Controller Set

Table 2 lists properties of a ControllerSet object.

**Table 2.**

| **Name** | **Type** | **Use** | **Description** |
|---|---|---|---|
| name | string | O | The name of the controller set. |
| id | integer | M | A unique identifier of the controller set. |
| description | string | O | The description of the controller set. |
| purpose | string | O | The purpose of the controller set. |
| controllers | array(Controller) | M | The list of controllers. |
| weights | array(number) | O | Default controller weights. |

The "name" property defines the name of the avatar controller set.

The "id" property defines a unique integer for identifying the avatar controller.

The "description" property describes the avatar controller set and its usage. For example, the "description" property may be used in a user interface to help the user understand for what the controller set was intended.

The "purpose" property contains a string that identifies the purpose of the avatar controller set. The "purpose" property follows predetermined values, defined by an application or a standard. In some embodiments, the type of this property is an enum.

The "controllers" list defines the controllers to use and how to use them. See Table 3.

The "weights" property defines the default controller weights to use. The length of this array must be equal to the number of items in "controllers".

### Signaling a Controller

Table 3 lists properties of a Controller object.

**Table 3.**

| **Name** | **Type** | **Use** | **Description** |
|---|---|---|---|
| name | string | O | The name of the controller. |
| id | integer | M | A unique identifier of the controller. |
| description | string | O | The description of the controller. |
| purpose | string | O | The purpose of the controller. |
| channels | array(Channel) | M | The list of controller channels. |
| range | number[2] | O | Minimum and maximum values for the controller weight. |
| weight | number | O | The controller weight must be multiplied by this value. Default is 1.0. |

The "name" property defines the name of the controller.

The "id" property defines a unique integer for identifying the controller.

The "description" property describes the controller and its usage. For example, the "description" property may be used in a user interface to help the user understand for what the controller was intended.

The "purpose" property contains a string that identifies the purpose of the controller. The "purpose" property follows predetermined values, defined by an application or a standard. In some embodiments, the type of this property is an enum.

The "channels" property contains the list of channels for this controller. See Table 4.

The "range" property defines the minimum and maximum value the controller weight may get. If not defined, these extrema are defined by the "range" properties or deduced from the input values of the channels.

The "weight" property defines a value to multiply to the controller weight. If the controller weight is *wᵢ* and the value of this property is *w_{c}*, then the controller weight to use is *wᵢw_{c}.* This methodology may be used to combine controllers. For instance, if *w_{c}* = 0.5 and if the controller has two channels referencing two other controllers, then the result is the average of the two referenced controllers.

### Signaling a Channel

Table 4 lists properties of a Channel object.

**Table 4.**

| **Name** | **Type** | **Use** | **Description** |
|---|---|---|---|
| weight | number | O | The channel weight must be multiplied by this value. Default is 1.0. |
| range | number[2] | O | Minimum and maximum values for the channel weight. |
| input | integer | M | The identifier of a data component with the input values. |
| interpolation | enum | O | The interpolation method (INTERPOLATION_LINEAR, INTERPOLATION_STEP or INTERPOLATION_CUBICSPLINE). Default is INTERPOLATION_LINEAR. |
| output | integer | M | The identifier of a data component with the output values |
| target | enum | M | Defines the target of the channel (CHANNEL_BLENDSHAPE, CHANNEL_JOINT, CHANNEL_JOINT_ROTATION, CHANNEL_JOINT_SCALE, CHANNEL_JOINT_TRANSLATION, CHANNEL_CONTROLLER, CHANNEL_TEXTURE, CHANNEL_UV, CHANNEL_SHADER_VARIABLE). |
| if (target == CHANNEL_BLENDSHAPE) { | | | |
| blendshapeSet | integer | M | The identifier of a blendshape set. |
| blendshapeShape | integer | M | The index of a shape in the blendshape set. |
| } else if (target == CHANNEL_JOINT or target == CHANNEL_JOINT_ROTATION or target == CHANNEL_JOINT_SCALE or target == CHANNEL_JOINT_TRANSLATION) { | | | |
| skin | integer | O | The identifier of a skin. |
| joint | integer | M | The identifier of a joint. |
| } else if (target == CHANNEL_CONTROLLER) { | | | |
| controllerSet | integer | O | The identifier of a controller set (default same set). |
| controller | integer | M | The identifier of a controller in the controller set. |
| } else if (target == CHANNEL_TEXTURE) { | | | |
| textureSet | integer | M | The identifier of a texture set. |
| texture | integer | M | The identifier of a texture in the texture set. |
| } else if (target == CHANNEL_UV) { | | | |
| uvSet | integer | M | The identifier of a UV set. |
| uv | integer | M | The identifier of a UV mapping in the UV set. |
| } else if (target == CHANNEL_SHADER_VARIABLE) { | | | |
| shaderProgram | string | M | The name or identifier of a shader program. |
| shaderVariable | string | M | The name or identifier of a uniform variable in the shader program. |
| } | | | |

The "input", "interpolation" and "output" properties define a function which, given a channel weight *w*, returns *k* values, as shown in Eq. 1: $f \left(w\right) \to {R}^{k}$

The value of *w* depends on the initial controller weight *wᵢ* (defined by a user for instance), the weight *w_{c}* defined in the controller that contains this channel, and by the weight *c* defined by the "weight" property of the channel, as shown in Eq. 2: $w = clip \left({w}_{i}{w}_{c}{w}_{h}\right)$

The *clip*() function ensures that the weight *w* is inside the valid range of the controller weight. This valid range is defined by the "range" property of the channel or by the minimum and maximum values of "input" if this valid range is not stated.

The weight *wₕ* defined by the "weight" property of the channel may be used for creating a weighted combination of controllers (for instance).

The number of the values (*k*) returned by the function depends on the target of the channel defined by the "target" property.

If "target" is CHANNEL_BLENDSHAPE, the target of the channel is a blendshape identified by the "blendshapeSet" and "blendshapeShape" properties. The number of values (k) returned by the function is 1 (e.g., the weight of the blendshape).

If "target" is CHANNEL_JOINT, the target of the channel is the transform matrix of a joint identified by the "joint" property. The skinning used to update the vertices is the one referenced by the "skin" property (if present). The number of values (k) returned by the function is 16 (e.g., the 4x4 matrix transform).

If target is CHANNEL_JOINT_ROTATION, the target of the channel is the rotation of a joint identified by the "joint" property. The skinning used to update the vertices is the one referenced by the "skin" property (if present). The number of values (k) returned by the function is 4 (e.g., the quaternion rotation).

If "target" is CHANNEL_JOINT_SCALE, the target of the channel is the scale of a joint identified by the "joint" property. The skinning used to update the vertices is the one referenced by the "skin" property (if present). The number of values (k) returned by the function is 3 (e.g., the X, Y, Z scale factors).

If "target" is CHANNEL_JOINT_TRANSLATION, the target of the channel is a joint identified by the "joint" property. The skinning used to update the vertices is the one referenced by the "skin" property (if present). The number of values (k) returned by the function is 3 (e.g., the X, Y, Z translations).

If "target" is CHANNEL_CONTROLLER, the target of the channel is a controller identified by the "controllerSet" (same controller set as the controller of this channel if not defined) and "controller" properties. The number of values (k) returned by the function is 1.

If "target" is CHANNEL_TEXTURE, the target of the channel is a texture or a texture target identified by the "textureSet" and "texture" properties. The number of values (k) returned by the function is 1.

If "target" is CHANNEL_UV, the target of the channel is texture UV mapping identified by the "uvSet" and "uv" properties. The number of values (k) returned by the function is 9 (e.g., the 3x3 matrix transform).

If "target" is CHANNEL_SHADER_VARIABLE, the target of the channel is a uniform shader variable identified by the "shaderVariable" property and expected to be found in a shader program identified by the "shaderProgram" property. The number of values (k) depends on the shader variable.

The "input", "interpolation" and "output" properties encode the value of the function following an approach similar to the one for animations in gITF.

The "input" property references a list of weight key values (like time of keyframes in gITF). These values must be in increasing order. As a result, the first input value defines the lowest possible weight and the last one the highest possible weight, which may be modified by the "range" properties of the channel and the controller.

The "output" property references a list of target values (e.g., vectors of dimension k) for each input value.

### Signaling a Gaze Animation

The avatar gaze animation signaling discussed in the '173, '120, and '330 applications signal animations for animating the gaze. The GazeAnimation property has a signaling similar to the one of a channel of a controller, except that in the '330 application, the GazeAnimation property also may use an animation signaled in an external container.

The GazeAnimation property may be extended with new properties similar to the ones introduced in the previous section.

Table 5 lists elements of a GazeAnimation property.

**Table 5.**

| **Name** | **Type** | **Use** | **Description** | | |
|---|---|---|---|---|---|
| range | number[2] | M | Minimum and maximum angles of the rotation. | | |
| type | string | M | Type of gaze animation (GA_EXTERN, GA_CHANNELS, GA_BLENDSHAPE, GA_JOINT, GA_JOINT_ROTATION, GA_JOINT_SCALE, GA_JOINT_TRANSLATION, GA_CONTROLLER, GA_TEXTURE, GA_UV, GA_SHADER_VARIABLE) | | |
| if (type == GA_EXTERN) { | | | | | |
| data | number | M | The identifier of a data item with external content with animation. | | |
| path | string | M | The identifier, index or path of an animation or controller in the external container. | | |
| shift | number | O | A shift to apply to the input values of the animation or controller in the external container. | | |
| } else if (type == GA_CHANNELS) { | | | | | |
| channels | array(Channel) | M | mList of controller channels. | | |
| } else { | | | | | |
| input | integer | M | The identifier of a data component with the input values. | | |
| interpolation | enum | O | The interpolation method (INTERPOLATION_LINEAR, INTERPOLATION_STEP or INTERPOLATION_CUBICSPLINE). Default is INTERPOLATION_LINEAR. | | |
| output | integer | M | The identifier of a data component with the output values | | |
| if (type == GA_BLENDSHAPE) { | | | | | |
| blendshapeSet | number | M | The identifier of a blendshape set. | | |
| blendshapeShape | number | M | The index of a shape in the blendshape set. | | |
| } else if (type == GA_JOINT or type == GA_JOINT_ROTATION or type == GA_JOINT_SCALE or type == GA_JOINT_TRANSLATION) { | | | | | |
| skin | integer | O | The identifier of a skin. | | |
| joint | integer | M | The identifier of a joint. | | |
| } else if (type == GA_CONTROLLER) { | | | | | |
| controllerSet | integer | M | The identifier of a controller set. | | |
| controller | integer | M | The identifier of a controller in the controller set. | | |
| } else if (type == GA_TEXTURE) { | | | | | |
| textureSet | integer | M | The identifier of a texture set. | | |
| texture | integer | M | The identifier of a texture in the texture set. | | |
| } else if (type == GA_UV) { | | | | | |
| uvSet | integer | M | The identifier of a UV set. | | |
| uv | integer | M | The identifier of a UV mapping in the UV set. | | |
| } else if (type == GA_SHADER_VARIABLE) { | | | | | |
| shaderProgram | string | M | The name or identifier of a shader program. | | |
| shaderVariable | string | M | The name or identifier of a uniform variable in the shader program. | | |
| } | | | | | |
| } | | | | | |

Compared to the previous discussions, the "type" property may have the following new values.

If "type" is GA_TEXTURE, the target of the gaze animation is a texture or a texture target identified by the "textureSet" and "texture" properties. The number of values (k) returned by the function is 1.

If "type" is GA_UV, the target of the gaze animation is texture UV mapping identified by the "uvSet" and "uv" properties. The number of values (k) returned by the function is 9 (e.g., the 3x3 matrix transform).

If "type" is GA_SHADER_VARIABLE, the target of the gaze animation is a uniform shader variable identified by the "shaderVariable" property and expected to be found in a shader program identified by the "shaderProgram" property. The number of values (k) depends on the shader variable.

### Parse LOD

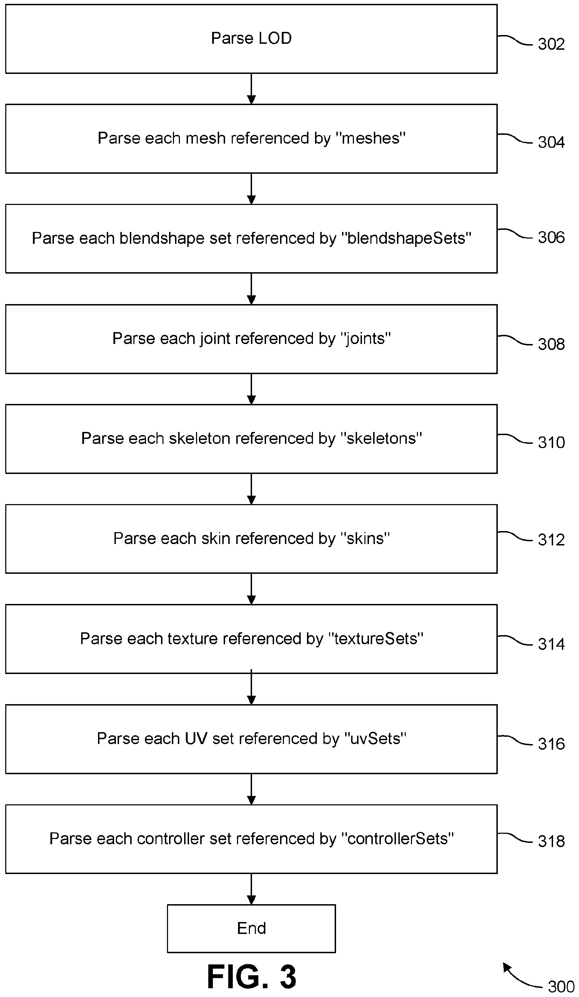

FIG. 3 is a flowchart illustrating an example process for parsing of an LOD object with the "controllers" property according to some embodiments. FIG. 3 shows an example parsing process 300. The parse LOD process 302 happens each time a level of detail (LOD) object in the ARF file is processed. In process box 304, each mesh referenced by an item in the "meshes" list is parsed. In process box 306, each blendshape set referenced by an item in the "blendshapesSets" list is parsed. In process box 308, each joint referenced by an item in the "joints" list is parsed. In process box 310, each skeleton referenced by an item in the "skeletons" list is parsed. In process box 312, each skin referenced by an item in the "skins" list is parsed. In process box 314, each texture referenced by an item in the "textureSets" list is parsed. In process box 316, each UV set referenced by an item in the "uvSets" list is parsed. In process box 318, each controller set referenced by an item in the "controllerSets" list is parsed. Upon finishing the controller set parsing, the example parsing process 300 ends.

### Parse ControllerSet

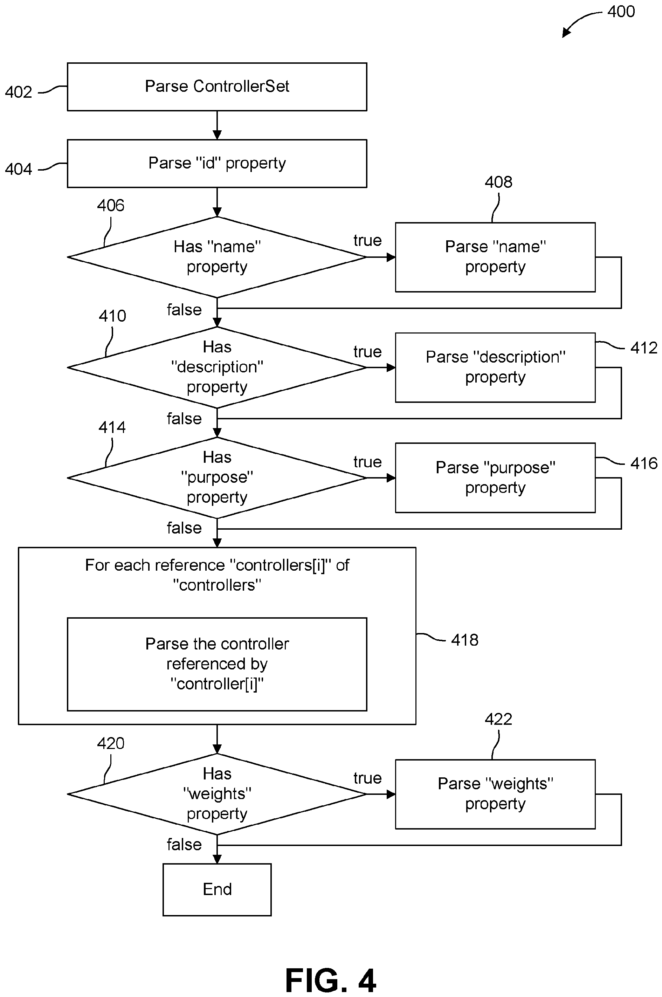

FIG. 4 is a flowchart illustrating an example process for parsing of a ControllerSet object according to some embodiments. FIG. 4 shows an example ControllerSet object parsing process 400. The parse ControllerSet process 402 happens each time a ControllerSet object in the ARF file is processed.

In process box 404, the "id" property is parsed. The "id" property must be different from the other controller sets. A determination 406 is made to determine whether the "name" property is present. If present, parse 408 the "name" property. A determination 410 is made to determine whether the "description" property is present. If present, parse 412 the "description" property. A determination 414 is made to determine whether the "purpose" property is present. If present, parse 416 the "purpose" property. For each reference "controllers[i]" of the "controllers" object, parse 418 the controller referenced by the "controllers" property. A determination 420 is made to determine whether the "weights" property is present. If present, parse 422 the "weights" property. The length of "weights" must be equal to the size of "controllers".

### Parse Controller

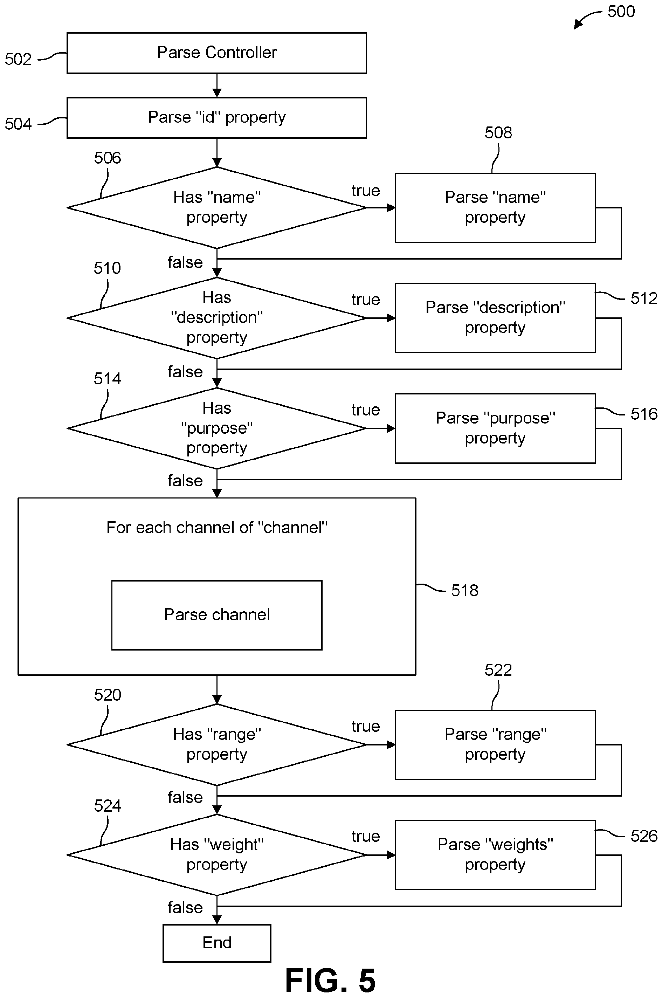

FIG. 5 is a flowchart illustrating an example process for parsing of a Controller object according to some embodiments. FIG. 5 shows an example Controller object parsing process 500. The parse Controller process 502 happens each time a Controller object in the ARF file is processed.

In process box 504, the "id" property is parsed. The "id" property must be different from the other controller sets. A determination 506 is made to determine whether the "name" property is present. If present, parse 608 the "name" property. A determination 510 is made to determine whether the "description" property is present. If present, parse 512 the "description" property. A determination 514 is made to determine whether the "purpose" property is present. If present, parse 516 the "purpose" property. For each channel of the "channel" object, parse 518 the channel property.

A determination 520 is made to determine whether the "range" property is present. If present, parse 522 the "range" property. If not present, the default value is minimum and maximum values of the inputs of the channel. A determination 524 is made to determine whether the "weights" property is present. If present, parse 526 the "weights" property. If not present, the default value is 1.0.

### Parse Channel

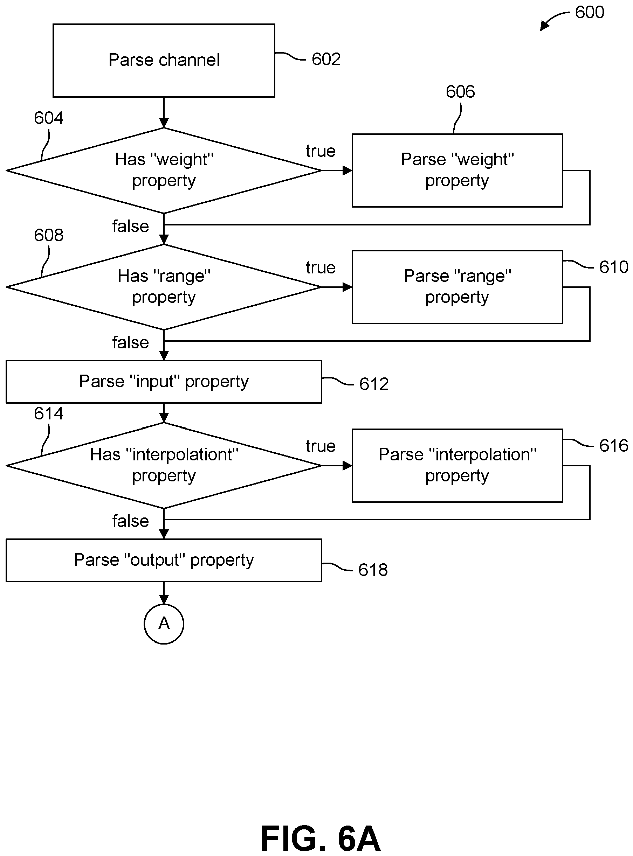

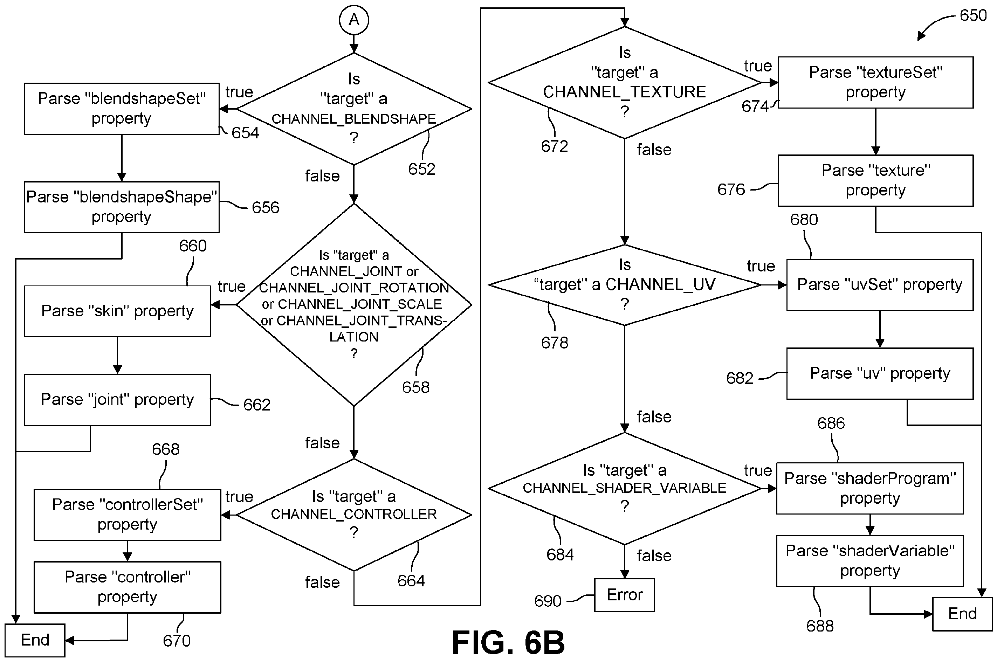

FIGs. 6A and 6B show a flowchart illustrating an example process for parsing a Channel object according to some embodiments. FIGs. 6A and 6B show an example Channel object parsing process 600. The parse Channel process 602 happens each time a Channel object in the ARF file is processed.

A determination 604 is made to determine whether the "weights" property is present. If present, parse 606 the "weights" property. If not present, the default value is 1.0. A determination 608 is made to determine whether the "range" property is present. If present, parse 610 the "range" property. If not present, the default value is minimum and maximum values of the inputs of the channel. In process box 612, the "input" property is parsed. The "input" property must reference valid data.

A determination 614 is made to determine whether the "interpolation" property is present. If present, parse 616 the "interpolation" property. If not present, the default value is LINEAR_INTERPOLATION. In process box 618, the "output" property is parsed. The "output" property must reference valid data. The number of values (e.g., the first dimension of a tensor) of the output must be equal to the size of input. The connector circle at the bottom of FIG. 6A connects with the connector circle at the top of FIG. 6B.

A determination 652 is made to determine whether the "target" property is CHANNEL_BLENDSHAPE. If the "target" property is CHANNEL_BLENDSHAPE, parse 654 the "blendshapeSet" property and parse 656 the "blendshapeShape" property. The "blendshapeSet" property must reference a valid blendshape set, and the "blendshapeShape" must reference a valid blendshape within this set.

If the "target" property is not CHANNEL_BLENDSHAPE, a further determination 658 is made to determine the value of the "target" property. If the "target" property is CHANNEL_JOINT, CHANNEL_JOINT_ROTATION, CHANNEL_JOINT_SCALE, or CHANNEL_JOINT_TRANSLATION, then parse 660 the "skin" property and parse 662 the "joint" property. If the "skin" property is not present, then this channel does not update the vertices of a mesh (only the joint is transformed). The "skin" property must reference a valid skin property, and the "joint" property must reference a valid node.

If the "target" property is not CHANNEL_JOINT, CHANNEL_JOINT_ROTATION, CHANNEL_JOINT_SCALE, or CHANNEL_JOINT_TRANSLATION, then a determination 664 is made to determine if the "target" property is CHANNEL_CONTROLLER. If the "target" property is CHANNEL_CONTROLLER, then parse 668 the "controllerSet" property and parse 670 the "controller" property. If "controllerSet" is not present, then the default value is the current controller set. The "controllerSet" property must reference a valid controller set, and the "controller" property must reference a valid controller within this set.

If the "target" property is not CHANNEL_CONTROLLER, then a determination 672 is made to determine if the "target" property is CHANNEL_TEXTURE. If the "target" property is CHANNEL_TEXTURE, then parse 674 the "textureSet" property and parse 676 the "texture" property. The "textureSet" property must reference a valid texture set, and the "texture" property must reference a valid texture within this set.

If the "target" property is not CHANNEL_TEXTURE, then a determination 678 is made to determine if the "target" property is CHANNEL_UV. If the "target" property is CHANNEL_UV, then parse 680 the "uvSet" property and parse 682 the "uv" property. The "uvSet" property must reference a valid texture set, and the "uv" property must reference a valid UV mapping within this set.

If the "target" property is not CHANNEL_UV, then a determination 684 is made to determine if the "target" property is CHANNEL_SHADER_VARIABLE. If the "target" property is CHANNEL_SHADER_VARIABLE, then parse 686 the "shaderProgram" property and parse 688 the "shaderVariable" property. The "shaderProgram" property must reference a valid shader program, and the "shaderVariable" property must reference a valid uniform variable within this shader program.

If the "target" property is not CHANNEL_SHADER_VARIABLE, then an error is raised 690 because the value of the "target" property is invalid.

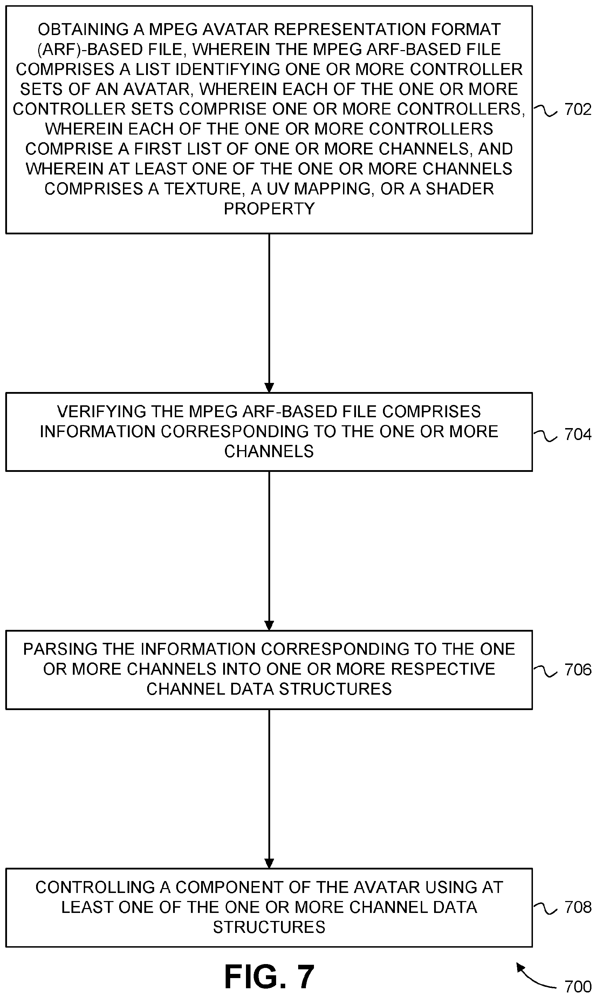

FIG. 7 is a flowchart illustrating an example process for parsing a MPEG ARF-based file according to some embodiments. For some embodiments, an example process 700 may include obtaining 702 a MPEG Avatar Representation Format (ARF)-based file, wherein the MPEG ARF-based file comprises a list identifying one or more controller sets of an avatar, wherein each of the one or more controller sets comprise one or more controllers, wherein each of the one or more controllers comprise a first list of one or more channels, and wherein at least one of the one or more channels comprises a texture, a UV mapping, or a shader property. For some embodiments, the example process 700 may further include verifying 704 the MPEG ARF-based file comprises information corresponding to the one or more channels. For some embodiments, the example process 700 may further include parsing 706 the information corresponding to the one or more channels into one or more respective channel data structures. For some embodiments, the example process 700 may further include controlling 708 a component of the avatar using at least one of the one or more channel data structures.

An example apparatus in accordance with some embodiments may include at least one processor configured to perform any one of the methods described within this application. An example apparatus in accordance with some embodiments may include a computer-readable medium storing instructions for causing one or more processors to perform any one of the methods described within this application. An example apparatus in accordance with some embodiments may include at least one processor and at least one non-transitory computer-readable medium storing instructions for causing the at least one processor to perform any one of the methods described within this application. An example signal in accordance with some embodiments may include a bitstream generated according to any one of the methods described within this application.

While the methods and systems in accordance with some embodiments are generally discussed in context of extended reality (XR), some embodiments may be applied to any XR contexts such as, e.g., virtual reality (VR) / mixed reality (MR) / augmented reality (AR) contexts. Also, although the term "head mounted display (HMD)" is used herein in accordance with some embodiments, some embodiments may be applied to a wearable device (which may or may not be attached to the head) capable of, e.g., XR, VR, AR, and/or MR for some embodiments.

An example method in accordance with some embodiments may include: obtaining a MPEG Avatar Representation Format (ARF)-based file, wherein the MPEG ARF-based file includes a list identifying one or more controller sets of an avatar, wherein each of the one or more controller sets include one or more controllers, wherein each of the one or more controllers include a first list of one or more channels, and wherein at least one of the one or more channels includes a texture, a UV mapping, or a shader property; verifying the MPEG ARF-based file includes information corresponding to the one or more channels; parsing the information corresponding to the one or more channels into one or more respective channel data structures; and controlling a component of the avatar using at least one of the one or more channel data structures.

For some embodiments of the example method, the MPEG ARF-based file includes a second list identifying one or more texture sets of the avatar.

For some embodiments of the example method, the MPEG ARF-based file includes a third list identifying one or more UV sets of the avatar.

For some embodiments of the example method, the MPEG ARF-based file includes a fourth list identifying one or more eye sets of the avatar.

For some embodiments of the example method, the MPEG ARF-based file includes information identifying one or more gaze animation properties associated with at least one of the one or more eye sets of the avatar.

For some embodiments of the example method, at least one of the one or more gaze animation properties identifies a texture, a UV mapping, or a shader program.

For some embodiments of the example method, the UV mapping maps one or more textures to the avatar.

For some embodiments of the example method, each of the one or more channel data structures include a weight, a range, and a target of the respective channel data structure.

Some embodiments of the example method may further include: identifying the target of at least one of the one or more channel data structures as indicating a texture channel; and parsing texture data in the corresponding channel data structure.

Some embodiments of the example method may further include: identifying the target of one of the one or more channel data structures as indicating a UV channel; and parsing UV data in the corresponding channel data structure.

For some embodiments of the example method, the UV data includes a matrix transformation.

Some embodiments of the example method may further include: identifying the target of one of the one or more channel data structures as indicating a shader variable channel; and parsing shader property data in the corresponding channel data structure.

For some embodiments of the example method, the shader property data identifies a uniform shader variable.

For some embodiments of the example method, the shader property data identifies a shader program.

An example apparatus in accordance with some embodiments may include: a processor; and a memory storing instructions operative, when executed by the processor, to cause the apparatus to perform any one of the methods listed above.

One or more embodiments provide a computer program including instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods include one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present application may refer to "determining" various pieces of information. Determining information may include one or more of, for example, estimating, calculating, predicting, or retrieving (e.g., from memory) the information.

The present application may refer to "accessing" various pieces of information. Accessing information may include one or more of, for example, receiving, retrieving (e.g., from memory), storing, moving, copying, calculating, determining, predicting, or estimating the information. Similarly, the present application may refer to "receiving" various pieces of information. Receiving information may include one or more of, for example, accessing or retrieving (e.g., from memory) the information.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present application or the following claims. Although features and elements are described herein in particular combinations, those of ordinary skill in the art will appreciate that such features or elements may be used alone or in any combination with the other features and elements. It is understood, therefore, that the overall teachings of the present application are not limited to the particular embodiments, implementations, and examples disclosed herein, but are intended to cover variations, modifications, and alternatives as defined by the appended claims and any and all equivalents thereof.

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

Various numeric values may be used in the present application, for example. The specific values are for example purposes and the aspects described are not limited to these specific values.

Embodiments described herein may be carried out by computer software implemented by a processor or other hardware, or by a combination of hardware and software. As a non-limiting example, the embodiments can be implemented by one or more integrated circuits. The processor can be of any type appropriate to the technical environment and can encompass one or more of microprocessors, general purpose computers, special purpose computers, and processors based on a multi-core architecture, as non-limiting examples.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items as are listed.

Implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method comprising:
obtaining a MPEG Avatar Representation Format (ARF)-based file,
wherein the MPEG ARF-based file comprises a list identifying one or more controller sets of an avatar,
wherein each of the one or more controller sets comprise one or more controllers,
wherein each of the one or more controllers comprise a first list of one or more channels, and
wherein at least one of the one or more channels comprises a texture, a UV mapping, or a shader property;
verifying the MPEG ARF-based file comprises information corresponding to the one or more channels;
parsing the information corresponding to the one or more channels into one or more respective channel data structures; and
controlling a component of the avatar using at least one of the one or more channel data structures.

2. The method of claim 1, wherein the MPEG ARF-based file comprises a second list identifying one or more texture sets of the avatar.

3. The method of any one of claims 1-2, wherein the MPEG ARF-based file comprises a third list identifying one or more UV sets of the avatar.

4. The method of any one of claims 1-3, wherein the MPEG ARF-based file comprises a fourth list identifying one or more eye sets of the avatar.

5. The method of claim 4, wherein the MPEG ARF-based file comprises information identifying one or more gaze animation properties associated with at least one of the one or more eye sets of the avatar.

6. The method of claim 5, wherein at least one of the one or more gaze animation properties identifies a texture, a UV mapping, or a shader program.

7. The method of any one of claims 1-6, wherein the UV mapping maps one or more textures to the avatar.

8. The method of any one of claims 1-7, wherein each of the one or more channel data structures comprise a weight, a range, and a target of the respective channel data structure.

9. The method of claim 8, further comprising:
identifying the target of at least one of the one or more channel data structures as indicating a texture channel; and
parsing texture data in the corresponding channel data structure.

10. The method of claim 8, further comprising:
identifying the target of one of the one or more channel data structures as indicating a UV channel; and
parsing UV data in the corresponding channel data structure.

11. The method of claim 10, wherein the UV data comprises a matrix transformation.

12. The method of claim 8, further comprising:
identifying the target of one of the one or more channel data structures as indicating a shader variable channel; and
parsing shader property data in the corresponding channel data structure.

13. The method of claim 12, wherein the shader property data identifies a uniform shader variable.

14. The method of claim 12, wherein the shader property data identifies a shader program.

15. An apparatus comprising:
a processor; and
a memory storing instructions operative, when executed by the processor, to cause the apparatus to perform the method of any one of claims 1 through 14.
